(19) Europäisches Patentamt
European Patent Office
Office européen des brevets

(11) **EP 3 140 534 B1**

(12) **EUROPÄISCHE PATENTSCHRIFT**

(45) Veröffentlichungstag und Bekanntmachung des Hinweises auf die Patenterteilung:
**06.06.2018 Patentblatt 2018/23**

(21) Anmeldenummer: **15719438.2**

(22) Anmeldetag: **22.04.2015**

(51) Int Cl.:
*F02C 9/00* (2006.01)     *F02C 9/28* (2006.01)

(86) Internationale Anmeldenummer:
**PCT/EP2015/058637**

(87) Internationale Veröffentlichungsnummer:
**WO 2015/169586 (12.11.2015 Gazette 2015/45)**

(54) **VERFAHREN ZUR AUSWAHL VON BETRIEBSPUNKTEN EINER GASTURBINE**

METHOD FOR SELECTING OPERATING POINTS OF A GAS TURBINE

PROCÉDÉ DE SÉLECTION DE POINTS DE FONCTIONNEMENT D'UNE TURBINE À GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.05.2014 EP 14166968**

(43) Veröffentlichungstag der Anmeldung:
**15.03.2017 Patentblatt 2017/11**

(73) Patentinhaber: **Siemens Aktiengesellschaft 80333 München (DE)**

(72) Erfinder:
• **AMANN, Christian 46238 Bottrop (DE)**
• **BECKMANN, Björn 47057 Duisburg (DE)**
• **DEUKER, Eberhard 45481 Mülheim an der Ruhr (DE)**
• **KADAU, Kai Lake Wylie, South Carolina 29710 (US)**
• **KOCK, Boris Ferdinand 40878 Ratingen (DE)**
• **ROLLMANN, Georg 45472 Mülheim Ruhr (DE)**
• **SCHMITZ, Sebastian 10437 Berlin (DE)**
• **ZWINGENBERG, Marcel 46509 Xanten (DE)**

(56) Entgegenhaltungen:
**EP-A2- 2 423 489     WO-A1-2011/064343**
**US-A1- 2008 229 754**

**EP 3 140 534 B1**

## Beschreibung

Die vorliegende Erfindung betrifft ein Verfahren zur Auswahl von Betriebspunkten einer Gasturbine unter Berücksichtigung von zumindest einer Regelgröße, wobei die Betriebspunkte zumindest durch Parameterkombinationen von Stellgrößen definiert sind.

Gasturbinen sind Strömungsmaschinen, die in der Regel einen Verdichter, eine Turbine und eine Brenneranordnung aufweisen, die mehrere Brenner sowie zumindest eine Brennkammer umfasst, wobei die Brenner verschiedene Brennerstufen bilden, wie beispielsweise eine Pilotbrennerstufe und mehrere Hauptbrennerstufen. Während des Betriebs einer Gasturbine saugt der Verdichter Umgebungsluft an und verdichtet diese. Die verdichtete Luft wird daraufhin zu den einzelnen Brennern geleitet und in diesen mit Brennstoff gemischt. Anschließend werden die erzeugten Brennstoff-Luft-Gemische in der Brennkammer verbrannt. Die bei der Verbrennung entstehenden heißen Verbrennungsabgase werden dann der Turbine zugeführt, in der sie die Leitschaufeln antreiben. Auf diese Weise wird thermische Energie der Verbrennungsabgase in mechanische Arbeit umgewandelt, die einerseits zum Antreiben des Verdichters und andererseits zum Antreiben eines Verbrauchers eingesetzt wird, wie beispielsweise eines Generators zum Erzeugen von elektrischem Strom. Ein Verfahren zur Auswahl von Betriebspunkten einer Gasturbine wird in WO2011/064343 offenbart. Während des Betriebs einer Gasturbine ist darauf zu achten, dass Werte vorbestimmter Regelgrößen in zulässigen Soll-Bereichen liegen. Als wichtige Regelgröße ist zum einen die Verbrennungsstabilität der Gasturbine zu nennen, die auch als "Brummverhalten" bezeichnet wird. Instabilitäten bei der Verbrennung werden insbesondere aufgrund von resonanten Wärmefreisetzungsschwankungen hervorgerufen und können Schwingungen und Vibrationen der Brennkammer verursachen, welche die Lebensdauer der Brennkammer herabsetzen und Wartungsintervalle verkürzen. Entsprechend ist sicherzustellen, dass zulässige Grenzwerte nicht überschritten werden. Eine weitere wichtige Regelgröße stellt das Emissionsverhalten der Gasturbine dar, die auch von der Verbrennungsstabilität beeinflusst wird. So dürfen in vielen Ländern vorbestimmte Emissionsgrenzwerte nicht überschritten werden. Auch hier muss die Einhaltung der zulässigen Werte gewährleistet sein.

Eine ordnungsgemäße Einstellung einer oder mehrerer Regelgrößen kann durch die Auswahl geeigneter Betriebspunkte der Gasturbine erzielt werden, die zumindest durch Parameterkombinationen von Stellgrößen definiert sind. Als Stellgrößen sind insbesondere ein der Gasturbine zugeführter Gesamtbrennstoffvolumenstrom und eine Aufteilung des Gesamtbrennstoffvolumenstroms auf die einzelnen Brennerstufen der Gasturbine zu nennen. Beide Stellgrößen haben maßgeblichen Einfluss sowohl auf das Emissionsverhalten als auch auf die Verbrennungsstabilität der Gasturbine. Ein Problem besteht allerdings darin, dass die geeigneten Betriebspunkte von Gasturbine zu Gasturbine selbst dann variieren, wenn die Gasturbinen baugleich ausgeführt sind. Grund für diese Variation sind insbesondere unterschiedliche Umgebungsbedingungen, schwankende Gasqualität und spezifische Kundenanforderungen. Zudem können die Betriebspunkte einer Gasturbinenanlage mit der Zeit Veränderungen unterworfen sein. Dies führt dazu, dass die Auswahl geeigneter Betriebspunkte für jede Gasturbine gesondert zu erfolgen hat, ebenso wie eine Nachjustierung von Betriebspunkten.

Die Auswahl geeigneter Betriebspunkte einer Gasturbine erfolgt bislang manuell. Dabei orientiert man sich in erster Linie an Fahrlinien und Kennfeldern bereits bestehender Gasturbinen, die dann modifiziert werden. Eine manuelle Auswahl von Betriebspunkten erfordert aufgrund des großen Parameterraums und der Vielzahl von Einflussgrößen allerdings sehr viel Erfahrung und ist darüber hinaus ausgesprochen zeitintensiv. Auch ist es schwierig, auf unvorhergesehene Abweichungen der Regelgrößen zu reagieren.

Ausgehend von diesem Stand der Technik ist es eine Aufgabe der vorliegenden Erfindung, ein alternatives Verfahren der eingangs genannten Art zu schaffen, das sich einfach, schnell und preiswert durchführen lässt.

Zur Lösung dieser Aufgabe schafft die vorliegende Erfindung ein Verfahren der eingangs genannten Art, das dadurch gekennzeichnet ist, dass die Betriebspunkte unter Verwendung eines Interpolationsverfahrens basierend auf bereits bekannten Parameterkombinationen automatisch ausgewählt werden, wobei als Interpolationsverfahren das Kriging-Interpolations-verfahren eingesetzt wird. Mit diesem Interpolationsverfahren wurden sehr gute Ergebnisse erzielt. Als bekannte Parameterkombinationen werden erfindungsgemäß solche Parameterkombinationen angesehen, für die die zugehörigen Werte der Regelgrößen bekannt sind. Der Einsatz eines Interpolationsverfahrens bei der Auswahl von Betriebspunkten ist dahingehend von Vorteil, dass eine sehr gute Balance zwischen der Exploration des Parameterraums und der Ausnutzung bereits gewonnener Informationen ermöglicht wird, was zu einer sehr effizienten Abrasterung des Parameterraums führt. Basierend auf den bereits vorhandenen oder angefahrenen Parameterkombinationen der Stellgrößen kann jeweils der nächste Betriebspunkt unter der Maßgabe berechnet werden, dass die erwartete Verbesserung ein Maximum einnimmt. Auf diese Weise können optimierte Betriebspunkte automatisch innerhalb kurzer Zeitdauer ausfindig gemacht und ausgewählt werden.

Bevorzugt umfassen die Stellgrößen einen der Gasturbine zugeführten Gesamtbrennstoffvolumenstrom und/oder eine Aufteilung des der Gasturbine zugeführten Gesamtbrennstoffvolumenstroms auf einzelne Brennerstufen der Gasturbine und/oder eine Gasturbinenaustrittstemperatur und/oder eine Stellung von Vorleitschaufeln der Gasturbine.

Die Regelgrößen beschreiben bevorzugt das Emissionsverhalten der Gasturbine und/oder die Verbrennungsstabilität der Gasturbine, da sich diese Regelgrößen besonders auf das Betriebsverhalten der Gasturbine auswirken.

Bei der Auswahl von Betriebspunkten wird vorteilhaft der Einfluss von Störgrößen berücksichtigt, wie beispielsweise die Umgebungstemperatur und/oder die Luftfeuchte der Umgebung und/oder der Umgebungsdruck und/oder die Dichte und der Heizwert des Brennstoffes, um nur einige Beispiele zu nennen.

Gemäß einer Variante der vorliegenden Erfindung sind die bereits bekannten Parameterkombinationen solche, die durch manuelle Variation der Parameter ermittelt worden sind, wobei bei der manuellen Variation der Parameter bevorzugt von bekannten Parameterkombinationen einer bereits bestehenden Gasturbine ausgegangen wird.

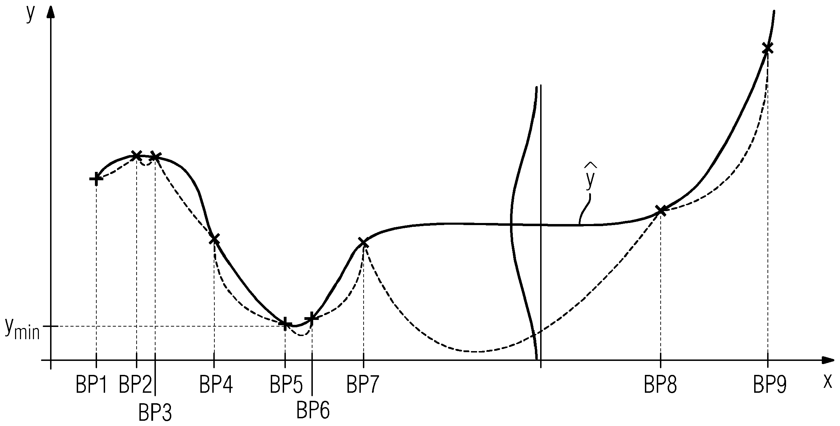

Weitere Merkmale und Vorteile der vorliegenden Erfindung werden anhand der nachfolgenden Beschreibung eines Verfahrens gemäß einer Ausführungsform der vorliegenden Erfindung unter Bezugnahme auf die beiliegende Zeichnung deutlich, bei der es sich um eine schematisches Diagramm handelt, welches eine Kriging-Interpolation für den eindimensionalen Fall darstellt.

Gemäß Kriging ist eine zu erwartende Verbesserung gegeben durch

$$EI(x) = \left(y\min - \hat{y}(x)\right) * \Phi\left(\frac{y\min - \hat{y}(x)}{\hat{s}(x)}\right) + \hat{s} * \phi\left(\frac{y\min - \hat{y}(x)}{\hat{s}(x)}\right)$$

Hierbei gibt $x$ die Parametereinstellung an, ymin das bisher gefundene Minimum der Regelgröße, $\hat{y}$ den durch den Kriging-Interpolator vorhergesagten Wert der Regelgröße für $x$, und $\hat{s}$ die geschätzte Standardabweichung der Regelgröße, wobei $\Phi$ bzw. $\phi$ die Verteilungsfunktion und Dichtefunktion der Standardnormalverteilung sind.

Das Diagramm zeigt nun beispielhaft die Wirkungsweise der Kriging-Interpolation für den eindimensionalen Fall. Die Betriebspunkte BP1 bis BP9 sind bereits bekannt. Das bedeutet, dass für die Betriebspunkte BP1 bis BP9 die Werte bekannt sind, welche die Regelgröße in diesen Betriebspunkten annimmt. Die jeweiligen Paare sind durch entsprechende Kreuze dargestellt. Die Werte der Regelgrößen für die Betriebspunkte BP1 bis BP9 können beispielsweise durch manuelle Variation der x-Werte ermittelt worden sein. Die durchgezogene Linie, welche die Kreuze miteinander verbindet, repräsentiert die Funktion der durch den Kriging-Interpolator vorhergesagten Werte der Regelgröße für unterschiedliche $x$-Werte. Die gestrichelte Linie repräsentiert ein unteres Konfidenzband. Die Unsicherheit ist naturgemäß dort am größten, wo erst wenige Informationen vorliegen, hier zwischen den Betriebspunkten BP7 und BP8, die in Richtung der x-Achse am weitesten voneinander entfernt sind. Ferner dargestellt ist eine untere Schranke, welche die erwartete Verbesserung definiert. Entsprechend kann sich ein weiterer Betriebspunkt BP10 durchaus in einem Bereich befinden, in dem zwar keine besonders niedrigen Werte für $y$ gefunden wurden, der Informationsgehalt jedoch noch gering ist.

Bei dem erfindungsgemäßen Verfahren wird das in der Zeichnung beispielhaft dargestellte Kriging-Verfahren im mehrdimensionalen Parameterraum angewandt, um basierend auf bereits bekannten Betriebspunkten neue viel versprechende Betriebspunkte systematisch zu suchen und, sollten sich diese als geeignet erweisen, automatisch auszuwählen. Dabei können grundsätzlich beliebig viele Stellgrößen und Regelgrößen berücksichtigt werden. Die Betriebspunkte werden dabei durch Parameterkombinationen der Stellgrößen definiert. Alternativ können Betriebspunkte durch Parameterkombinationen aus Stellgrößen und Störgrößen definiert werden.

Die Stellgrößen können einen der Gasturbine zugeführten Gesamtbrennstoffvolumenstrom und/oder eine Aufteilung des der Gasturbine zugeführten Gesamtbrennstoffvolumenstroms auf einzelne Brennerstufen der Gasturbine und/oder eine Gasturbinenaustrittstemperatur und/oder eine Stellung von Vorleitschaufeln der Gasturbine umfassen, um nur einige Beispiele zu nennen.

Die Regelgrößen können beispielsweise das Emissionsverhalten der Gasturbine und/oder Verbrennungsstabilität der Gasturbine beschreiben.

Beispiele für Störgrößen sind die Umgebungstemperatur und/oder die Luftfeuchte der Umgebung und/oder der Umgebungsdruck.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Auswahl von Betriebspunkten einer Gasturbine unter Berücksichtigung von zumindest einer Regelgröße, wobei die Betriebspunkte zumindest durch Parameterkombinationen von Stellgrößen definiert sind, wobei die Betriebspunkte unter Verwendung eines Interpolationsverfahrens basierend auf bereits bekannten Parameterkombinationen automatisch ausgewählt werden, **dadurch gekennzeichnet, dass** als Interpolationsverfahren das Kriging-Interpolations- verfahren verwendet wird.

2. Verfahren nach Anspruch 1, **dadurch gekennzeichnet, dass** die Stellgrößen einen der Gasturbine zugeführten Gesamtbrennstoffvolumenstrom oder eine Aufteilung des der Gasturbine zugeführten Gesamtbrennstoffvolumenstroms auf einzelne Brennerstufen der Gasturbine oder eine Gasturbinenaustrittstemperatur oder eine Stellung von Vorleitschaufeln der Gasturbine umfassen.

3. Verfahren nach einem der vorhergehenden Ansprüche, **dadurch gekennzeichnet, dass** die Regelgrößen das Emissionsverhalten der Gasturbine und/oder Verbrennungsstabilität der Gasturbine beschreiben.

4. Verfahren nach einem der vorhergehenden Ansprüche, **dadurch gekennzeichnet, dass** bei der Auswahl von Betriebspunkten der Einfluss von Störgrößen berücksichtigt wird.

5. Verfahren nach Anspruch 4, **dadurch gekennzeichnet, dass** die Störgrößen die Umgebungstemperatur und/oder die Luftfeuchte der Umgebung und/oder der Umgebungsdruck umfassen.

6. Verfahren nach einem der vorhergehenden Ansprüche, **dadurch gekennzeichnet, dass** die bereits bekannten Parameterkombinationen solche sind, die durch manuelle Variation der Parameter ermittelt worden sind.

7. Verfahren nach Anspruch 6, **dadurch gekennzeichnet, dass** bei der manuellen Variation der Parameter von bekannten Parameterkombinationen einer bereits bestehenden Gasturbine ausgegangen wird.

**Claims**

1. Method for selecting operating points of a gas turbine while taking into consideration at least one controlled variable, the operating points being defined at least by parameter combinations of manipulated variables,
   wherein
   the operating points are selected automatically using an interpolation method based on already known parameter combinations, **characterized in that** the Kriging interpolation method is used as the interpolation method.

2. Method according to Claim 1,
   **characterized in that**
   the manipulated variables comprise a total fuel volume flow supplied to the gas turbine, or a distribution of the total fuel volume flow supplied to the gas turbine over individual burner stages of the gas turbine, or a gas turbine outlet temperature or a position of guide vanes of the gas turbine.

3. Method according to any of the previous claims,
   **characterized in that**
   the controlled variables describe the emission behavior of the gas turbine and/or the combustion stability of the gas turbine.

4. Method according to any of the previous claims,
   **characterized in that**
   in the selection of operating points the influence of interfering variables is taken into consideration.

5. Method according to Claim 4,
   **characterized in that**
   the interfering variables comprise the ambient temperature and/or the air humidity of the environment and/or the ambient pressure.

6. Method according to any of the previous claims,
   **characterized in that**
   the already known parameter combinations are such as have been determined by manual variation of the parameters.

7. Method according to Claim 6,
   **characterized in that**

in the manual variation of the parameters, known parameter combinations of an already existing gas turbine are presupposed.

**Revendications**

1. Procédé de sélection de points de fonctionnement d'une turbine à gaz en tenant compte d'au moins une grandeur réglée, dans lequel les points de fonctionnement sont définis au moins par des combinaisons de paramètres de grandeurs réglantes, dans lequel on sélectionne automatiquement les points de fonctionnement en utilisant un procédé d'interpolation reposant sur des combinaisons de paramètres déjà connues, **caractérisé en ce que** l'on utilise, comme procédé d'interpolation, le procédé d'interpolation Kriging.

2. Procédé suivant la revendication 1, **caractérisé en ce que** les grandeurs réglantes comprennent un courant en volume total de combustible apporté à la turbine à gaz ou une répartition du courant en volume total de combustible apporté à la turbine à gaz entre divers étages de brûleur de la turbine à gaz ou une température de sortie de la turbine à gaz ou une position d'aubes de prérotation de la turbine à gaz.

3. Procédé suivant l'une des revendications précédentes, **caractérisé en ce que** les grandeurs réglées décrivent le comportement d'émission de la turbine à gaz et/ou une stabilité de combustion de la turbine à gaz.

4. Procédé suivant l'une des revendications précédentes, **caractérisé en ce que**, lors de la sélection de points de fonctionnement, on prend en compte l'influence de grandeurs perturbatrices.

5. Procédé suivant la revendication 4, **caractérisé en ce que** les grandeurs perturbatrices comprennent la température ambiante et/ou l'humidité de l'air de l'atmosphère ambiante et/ou la pression de l'atmosphère ambiante.

6. Procédé suivant l'une des revendications précédentes, **caractérisé en ce que** les combinaisons de paramètres déjà connues sont celles qui ont été déterminées en faisant varier manuellement les paramètres.

7. Procédé suivant la revendication 6, **caractérisé en ce que**, pour la variation manuelle des paramètres de combinaisons de paramètres connues, on part d'une turbine à gaz déjà existante.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011064343 A